# EUROPÄISCHE PATENTANMELDUNG

(11) **EP 3 173 363 A1**
(43) Veröffentlichungstag der Anmeldung: **31.05.2017**
(21) Anmeldenummer: 16161435.9
(22) Anmeldetag: 21.03.2016
(51) Int. Cl.: B65G 54/02, G05B 19/19, B23Q 15/24

(54) **VERFAHREN ZUR ERMITTLUNG EINES BEWEGUNGSABLAUFS FÜR EINEN LINEARANTRIEB**

(30) Priorität: 24.11.2015 EP 15196047; 24.11.2015 EP 15196041; 24.11.2015 EP 15196077
(71) Anmelder: Siemens Aktiengesellschaft, 80333 München (DE)
(72) Erfinder: Rothe, Sven, 70806 Kornwestheim (DE); Hofmann, Chris, 70563 Stuttgart (DE); Gierden, Marco, 91085 Weisendorf (DE); Hennefelder, Thomas, 91484 Markt Sugenheim (DE); Jäntsch, Michael, 91052 Erlangen (DE); Spindler, Carsten, 07368 Remptendorf (DE)

(57) **Zusammenfassung**

Zusammenfassend betrifft die Erfindung ein Verfahren zur Ermittlung eines Bewegungsablaufs (BA) für einen Linearantrieb (LA), ein Computerprogrammprodukt, einen Linearantrieb (LA) sowie eine industrielle Anlage. Für die Bereitstellung wird ein Linearantrieb (LA) und dem Linearantrieb (LA) zugeordnete Stationen (S1, S2, S3) vorgesehen. Hierzu werden den Stationen (S1, S2, S3) jeweils zumindest ein Bewegungsprofil (BP) zugeordnet. Weiter wird der jeweiligen Station (S1, S2, S3) eine Eingangsbedingung, das ist eine vorgesehene Anzahl (N) von Läufern (L), zugeordnet. Die jeweilige Station (S1, S2, S3) ist ein Abbild einer Maschinenstation (MS1, MS2, MS3). Eine Station (S1, S2, S3) kann im Rahmen eines Engineering-Programms als Technologieprojekt aufgefasst werden. Das Bewegungsprofil (BP) gibt an, welche Bewegung die Läufer (L) auf den Segmenten (Seg), gesteuert und/oder geregelt, ausführen. Es kann dynamisch eine Abfolge festgelegt werden, wobei die Abfolge angibt, welche Stationen (S1, S2, S3) der jeweilige Läufer (L) nachfolgend durchlaufen soll. Nach Durchlauf des entsprechenden Bewegungsprofils (BP) wird der Läufer (L) der nächsten Station (S1, S2, S3) zugeordnet. Aus den vorstehend ausgeführten Vorgaben sowie aus optional vorgebbaren Randbedingungen (RB) und/oder Startbedingungen wird der Bewegungsablauf (BA) berechnet. Die Berechnung erfolgt insbesondere während der Laufzeit des Linearantriebs (LA) (online-Berechnung). Der Bewegungsablauf (BA) kann an eine Steuereinrichtung (SE) des Linearantriebs (LA) übermittelt werden oder in der Steuereinrichtung ermittelt werden.

## Beschreibung

Verfahren, Steuereinrichtung, Linearantrieb und industrielle Anlage

Die Erfindung betrifft ein Verfahren zur Ermittlung eines Linearantriebs. Weiter betrifft die Erfindung ein Verfahren zum Betrieb eines Linearantriebs. Zudem betrifft die Erfindung ein Computerprogrammprodukt, eine Steuereinrichtung und einen Linearantrieb.

Linearantriebe werden heute vereinzelt in Fertigungsanlagen, insbesondere in Verpackungsmaschinen, eingesetzt. Ein Linearantrieb weist hierbei meist eine Mehrzahl von Segmenten, Läufern und zumindest eine Steuereinrichtung auf. Die Steuereinrichtung dient zur Steuerung der Bewegung der Läufer auf der Mehrzahl von Segmenten. Insbesondere bei umfangreichen Fertigungsanlagen ist die Vorgabe der Bewegung für die Läufer, also die Programmierung der Steuereinrichtung, sehr aufwändig und fehleranfällig.

Daher ist es Aufgabe der Erfindung, die Programmierung der Steuereinrichtung und somit die Vorgabe des von den Läufern auszuführenden Bewegungsablaufs zu vereinfachen und mit der vereinfachten Programmierung einen Linearantrieb zu betreiben.

### Lösungen

Die Aufgabe wird durch ein Verfahren zur Ermittlung eines Bewegungsablaufs für eine Steuereinrichtung eines Linearantriebs (LA) gelöst,
- wobei der Linearantrieb mit einer Mehrzahl von Segmenten ausgebildet ist,
- wobei Läufer zur Bewegung auf den Segmenten ausgelegt sind,
- wobei der Bewegungsablauf für die Bewegung der Läufer auf den Segmenten ausgelegt sind,
- wobei die Steuereinrichtung zur Steuerung und/oder Regelung der Bewegung der Läufer auf den Segmenten ausgelegt sind,
wobei der Bewegungsablauf durch zumindest folgende Verfahrensschritte ermittelt wird:
- Vorgabe von
   a) Stationen, wobei die Stationen entlang des Linearantriebs angeordnet sind,
      - wobei die Stationen Abbildungen von Maschinenstationen oder Transportbereiche sind,
      - wobei die Stationen jeweils eine vorgesehene Anzahl von Läufern als Eingangsbedingung aufweisen und nach Ablauf eines Bewegungsprofils die Läufer ausgeben,
   b) einer Abfolge der Läufer durch die Stationen,
      - wobei nach Ausgabe der Läufer aus der Station die Läufer von einer anderen der Stationen aufgenommen werden,
   c) Bewegungsprofilen der Läufer in der jeweiligen Station,
      - Ermittlung des Bewegungsablaufs der Läufer auf den Segmenten aus den Vorgaben.

Die Aufgabe wird weiter durch ein Computerprogrammprodukt gelöst, wobei das Computerprorammprodukt zum Ablauf auf einer Recheneinheit ausgebildet ist, wobei das Computerprogramm nach Installation auf der Recheneinheit ein Verfahren zur Ermittlung eines Bewegungsablaufes gemäß einem der Ansprüche 1 bis 15 ausführt.

Die Aufgabe wird weiter durch eine Steuereinrichtung zur Steuerung und/oder Regelung eines Linearantriebs gelöst, wobei die Steuereinrichtung die Bewegung der Läufer auf Segmenten steuert und/oder regelt und wobei die Steuereinrichtung den Bewegungsablauf gemäß einem Verfahren nach einem der Ansprüche 1 bis 15 bereitstellt.

Die Aufgabe wird weiter durch einen Linearantrieb gelöst, wobei der Linearantrieb Segmente, Läufer, optional zumindest eine Maschinenstation und eine Steuereinrichtung aufweist, wobei die Steuereinrichtung zur Aufnahme eines Bewegungsablaufs vorgesehen ist, welcher gemäß einem Verfahren nach einem der Ansprüche 1 bis 15 bereitgestellt ist.

Die Aufgabe wird weiter durch ein Verfahren zum Betrieb eines Linearantriebes gelöst, wobei der Linearantrieb zur Durchführung eines Bewegungsablaufs vorgesehen ist und wobei der Bewegungsablauf nach einem Verfahren gemäß einem der Ansprüche 1 bis 15 bereitgestellt ist.

Die Aufgabe wird weiter durch eine industrielle Anlage, insbesondere eine Produktionsmaschine, Verpackungsmasche oder eine Werkzeugmaschine, gelöst, wobei die industrielle Anlage einen Linearantrieb nach Anspruch 19 aufweist.

Vorteilhafte Weiterbildungen der Lösungen sind Gegenstand der abhängigen Ansprüche.

Das Verfahren zur Ermittlung eines Bewegungsablaufs dient zur Bereitstellung eines Bewegungsablaufs für eine Steuereinrichtung eines Linearantriebs. Der Linearantrieb weist eine Mehrzahl von Segmenten auf, wobei Läufer auf den Segmenten bewegt werden, wobei die Bewegung der Läufer durch einen Bewegungsablauf vorgegeben ist, wobei eine Steuereinrichtung die Bewegung der Läufer auf den Segmenten anhand des Bewegungsablaufs steuert oder regelt.

Der berechnete Bewegungsablauf wird nach Ermittlung an die Steuereinrichtung des Linearantriebs übermittelt. Als Steuereinrichtung eignet sich eine handelsübliche Bewegungssteuerung oder eine speicherprogrammierbare Steuerung (SPS). In einer bevorzugten Ausgestaltung erfolgt die Ermittlung des Bewegungsprofils während des Betriebs des Linearantriebs. Das Bewegungsprofil wird in der bevorzugten Ausgestaltung durch die Steuereinrichtung ausgeführt.

### 1. Allgemeines

Im Folgenden geht es um Abbildungen von realen Elementen eines Linearantriebs im Rahmen des Verfahrens zur Bereitstellung des Bewegungsablaufs. Vorzugsweise wird das Verfahren mit einem Computerprogrammprodukt, insbesondere einem Engineering-Programm oder einem Projektgenerator, ausgeführt. Besonders vorteilhaft erfolgt die Bereitstellung des Bewegungsablaufs in der Steuereinrichtung selbst. Eine Bereitstellung des Bewegungsablaufs erfolgt vorteilhaft online, d.h., während des Betriebs des Linearantriebs. Abbildungen von realen Bauteilen werden auch als Technologieobjekte bezeichnet. Technologieobjekte können mit Parametern, wie Länge des Segments oder einem Bewegungsprofils für eine Station versehen werden. Unter einem Technologieobjekt werden Daten verstanden, welche ein reales Objekt in einer Software-Umgebung abbildet. Reale Größen wie eine Drehgeschwindigkeit eines Motors werden durch Variable abgebildet und den Variablen sind Werte zuordenbar.

### 2. Virtueller Linearantrieb

Die Station entspricht einem Abbild einer Maschinenstation oder auch lediglich einem Abbild einer Transportstrecke. Unter einer Transportstrecke kann auch ein Förderband oder ein Abschnitt eines Förderbandes verstanden werden.

Eine Station kann auch als Technologieobjekt bezeichnet werden. Eine Station weist vorteilhaft entgegen einer Maschinenstation nicht notwendigerweise räumliche Abmessungen oder eine festgelegte Position auf. Die Station kann als logische Einheit verstanden werden. Eine Station definiert sich vorteilhaft lediglich durch die Aufnahme und Ausgabe einer vorgesehenen Anzahl von Läufern und optional einem Bewegungsprofil.

Das Bewegungsprofil ist eine Vorschrift, wie sich die Läufer in der jeweiligen Station bewegen sollen. Eine Station kann jedoch auch einem Verbindungsglied entsprechen, wobei das Verbindungsglied zur Übertragung der Läufer von einem Segment auf ein Förderband oder von einem Förderband auf ein Segment vorgesehen ist. Ein solcher Bereich, der vorwiegend zum Transport von Läufern von einer Station zu einer weiteren Station vorgesehen ist, wird auch als Transportbereich verstanden. Im Unterschied zu einer Station bedarf ein Transportbereich nicht notwendigerweise eines Bewegungsprofils, insbesondere wenn die Station einem Förderband entspricht. Im Falle eines Wechsels von dem Segment auf ein Förderband kann die Station auch zur Beschleunigung des Läufers auf dem Segment vorgesehen sein, so dass der Läufer das Segment verlassen kann.

Ein Transportbereich kann eine Abbildung eines Förderbandes, eines Laufbandes oder einer sonstig gearteten Aufnahme und Abgabevorrichtung für Läufer sein. Bei der Ermittlung des Bewegungsablaufs kann der Transferbereich wie eine Maschinenstation behandelt werden. Einem Transportbereich muss kein Bewegungsablauf zugeordnet werden.

Weiter ist ein Läufer im Sinne des Verfahrens ein Abbild eines realen Läufers, insbesondere als adressierbares Technologieobjekt, welche durch eine Ort-Zeit-Funktion oder durch eine Geschwindigkeits-Ortsfunktion beschrieben sein kann. Vorteilhaft weist ein Läufer keine statische Adresse auf, wobei insbesondere eine Station dem Läufer eine Adresse zuweisen kann.

Die Bewegung eines Läufers kann sich an dynamisch verändernde Randbedingungen anpassen. Unter dynamisch verändernde Randbedingungen können beispielsweise die Bewegung der weiteren Läufer und/oder der Betriebszustand von Maschinenstationen verstanden werden. Eine dynamisch veränderbare Randbedingung für die Bewegung eines Läufers kann auch aus einem Schwarmverhalten einer Mehrzahl von Randbedingungen erfolgen.

Weiter ist ein Segment, welches in einem realen Linearantrieb ein Linearmotorstator sein kann, als logischer Abschnitt definiert ist. Auf dem logischen Abschnitt kann ein Läufer bewegt werden. Ein Segment kann ebenfalls als Technologieobjekt definiert sein. Ein Segment kann durch seine Länge und/oder seine Anordnung in Bezug auf weitere Segmente definiert sein. Segmente, Läufer und Stationen bilden vorteilhaft eine Abbildung eines realen Linearantriebs in dem Computerprogrammprodukt.

### 3. Beschreibung des Projektgenerators

Mit Hilfe des Verfahrens zur Ermittlung des Bewegungsablaufs kann ein Benutzer anhand weniger Vorgaben einen Bewegungsablauf von Läufern auf einem realen Linearantrieb ermitteln. Zur Durchführung des Verfahrens dient vorzugsweise das hier beschriebene Computerprogrammprodukt. Ein solches Computerprogrammprodukt wird auch als Projektgenerator bezeichnet.

Es werden vorteilhaft zuerst Segmente definiert und dann die Anordnung der Segmente vorgegeben.

In einem weiteren Schritt werden die einzelnen Stationen definiert. Für eine Station wird eine Eingangsbedingung definiert. Der jeweiligen Station wird ein Bewegungsprofil zugeordnet.

Eine Eingangsbedingung kann durch eine vorgesehene Anzahl von Läufern definiert sein.

Der Projektgenerator bildet aus den manuell angeordneten (Technologie-)Objekten und optional weiteren Vorgaben, wie Randbedingungen, ein Projekt. Das Projekt kann der Steuereinrichtung bereitgestellt werden. Anhand des Projektes kann der Bewegungsablauf für den Linearantrieb ermittelt werden. Das Projekt kann einem Benutzer, insbesondere von einem Entwickler oder In-Betrieb-Setzer einer Anlage oder eines Linearantriebs, als Grundgerüst dienen, die Einrichtung des Linearantriebs zu programmieren.

Der Station kann weiter ein Bewegungsprofil zugeordnet werden. Das Bewegungsprofil definiert die Bewegung der Läufer in einem Einflussbereich der Station. Das Bewegungsprofil wird nach Erfüllen der Eingangsbedingung ausgeführt. Weiter wird auch eine vorgesehene Abfolge der Läufer durch die Stationen vorgegeben.

Unter einer vorgesehenen Abfolge wird verstanden, dass ein Läufer zunächst von einer ersten Station aufgenommen wird. Nach der ersten Station wird der Läufer zu einer zweiten Station bewegt und von der zweiten Station aufgenommen. Nach der zweiten Station wird der Läufer zu einer dritten Station bewegt und von der dritten Station aufgenommen. Die Läufer durchlaufen die Stationen somit (virtuell) gemäß der vorgesehenen Abfolge der Stationen.

Hierbei ist es nicht notwendig, dass jeder Läufer dieselben Stationen in derselben Abfolge durchläuft. Läufer können eine Station auch mehrmals durchlaufen und/oder Stationen auslassen.

Anhand der vorgesehenen Abfolge der Läufer kann auch eine optimierte Position der Stationen in Bezug zu den Segmenten vorgeschlagen werden.

Unter einem Bewegungsprofil wird eine Vorschrift verstanden, wie sich der Läufer oder die Läufer im Bereich der Station bewegt werden. Ein Bewegungsprofil kann durch eine Geschwindigkeitsfunktion von einer Position auf den Segmenten und/ oder einer Zeit gegeben sein.

Vorteilhaft kann auch eine Gruppierung von Läufern durch ein Bewegungsprofil ausgestaltet sein. Beispielhaft orientiert sich bei der Gruppierung eine Mehrzahl von Läufern an der Bewegung eines Läufers. Es kann so ein Schwarmverhalten von einer Mehrzahl von Läufern erreicht werden. Das Schwarmverhalten kann innerhalb einer Station und/oder außerhalb des Einflussbereiches der Station ausgebildet sein.

Die Läufer, die auf dem Linearantrieb bewegt werden, können aus einem Transportbereich und/oder einem Reservoir, insbesondere aus einem Förderband, stammen. Alternativ können die Läufer zu einem gewählten Anfangszeitpunkt an vorbestimmten Stellen auf dem Linearantrieb platziert sein. Weiter können die Läufer jeweils einer Station zu einem Anfangszeitpunkt zugeordnet sein.

Zur Berechnung des Bewegungsablaufs können handelsübliche Engineering-Programme modifiziert werden, welche anhand von Vorgaben Bewegungsabläufe erstellen können. Beispielhaft für ein solches Engineering-Programm ist das TIA-Portal der Firma Siemens AG.

Mit Hilfe des Verfahrens zur Erstellung eines Bewegungsablaufs und der Definition von Eingangsbedingungen und/oder Ausgangsbedingungen für die einzelnen Stationen kann somit durch wenige Vorgaben eine komplexe Bewegung einer Vielzahl von Läufern durch mehrere Stationen nacheinander auf einem Linearantrieb programmiert werden. Dies entlastet den Benutzer oder einen Entwickler einer industriellen Anlage erheblich.

In der bevorzugten Ausgestaltung dient der Projektgenerator lediglich zur Initialisierung von technologischen Objekten wie virtuellen Achsen, realen Achsen, Stationen sowie Transportbereiche. Die Initialisierung der technologischen Objekte (auch als Technologieobjekte bezeichnet) erfolgt mit Hilfe des Projektgenerators in der Steuereinrichtung oder zur Bereitstellung für die Steuereinrichtung. Das Projekt als Ausgabeprodukt des Projektgenerators für die Ermittlung des Bewegungsablaufs wird in der bevorzugten Ausgestaltung lediglich initialisiert oder vorbereitet. Die Ermittlung des Bewegungsablaufs erfolgt anhand des Projektes mit Hilfe einer Software der Steuereinrichtung.

### 4. Funktion eines realen Linearantriebs

Ein Linearantrieb umfasst eine Mehrzahl von Segmenten, die insbesondere als Linearmotor-Statoren oder Linearmotor-Primärelemente ausgestaltet sind. Die Segmente sind zumindest zum Teil Maschinenstationen zugeordnet. Die Maschinenstationen modifizieren Güter, die auf den Läufern positioniert sind. Die Läufer sind vorzugsweise als Linearmotor-Sekundärelemente eines in Lang-Stator-Bauweise ausgeführten Linearmotors ausgestaltet. Die Segmente sind vorzugsweise sequenziell aneinander gereiht.

Zur Steuerung und/oder Regelung der Bewegung der Läufer auf den Segmenten dient die Steuereinrichtung. Die Steuereinrichtung ist in einer Ausgestaltung mit den Segmenten direkt verbunden. Vorzugsweise ist die Steuereinrichtung mit Steuereinheiten verbunden, wobei die Steuereinheiten zur kontrollierten Stromversorgung der Segmente ausgebildet sind. Die Steuereinheiten sind vorzugsweise als Stromrichter und/oder als Verstärker ausgestaltet.

Die Segmente weisen zumindest zum Teil Sensoren auf, wobei die Sensoren zur Bestimmung der Position und/oder der Geschwindigkeit der Läufer auf den Segmenten bestimmt sind.

Neben Segmenten können die Läufer auch auf Förderbändern, oder anderen bekannten Vorrichtungen zur Bewegung oder Speicherung von Gütern oder Werkstücken, bewegt werden. Mit einem Laufband können Läufer besonders einfach von einem der Segmente zu einem anderen der Segmente transportiert werden. Ein Förderband kann zudem als ein Reservoir für die Läufer vorgesehen sein.

### 5. Zusammenwirken der virtuelle Maschine mit der reale Maschine

Die Stationen, die gemäß dem vorstehend beschriebenen Verfahren zur Ermittlung des Bewegungsablaufs vorgegeben werden, entsprechen Maschinenstationen, wobei die Maschinenstationen vorteilhaft entlang des Linearantriebs angeordnet sind. Durch das Verfahren zur Bereitstellung kann überdies die Planung der hier beschriebenen industriellen Anlage geplant werden.

Mit Hilfe des Verfahrens wird der Bewegungsablauf für eine Steuereinrichtung bereitgestellt. Je nach Ausgestaltung der Steuereinrichtung kann das Verfahren auch mit Hilfe der Steuereinrichtung ausgeführt werden.

Die Steuereinrichtung übergibt Signale an die Segmente oder an Steuereinheiten, welche zur Stromversorgung der Segmente vorgesehen sind. Durch die Steuereinrichtung und optional weitere Steuereinheiten werden die Läufer auf den Segmenten bewegt. Die Bewegung der Läufer erfolgt hierbei wie durch den Bewegungsablauf vorgegeben. Das Bewegungsprofil der jeweiligen Station kann durch die jeweilige Funktionsweise der Maschinenstation bestimmt werden. Falls die Station eine Abbildung eines Transportbereiches oder eines Puffers für die Läufer darstellt, bedarf die Station nicht notwendigerweise einer Zuweisung eines Bewegungsprofils, insbesondere wenn die Station einem Förderband entspricht. Falls die Station zur Überführung der Läufer von einer Station zu einer anderen Station dient, kann das Bewegungsprofil der Station dynamisch anpassbar sein. Das Bewegungsprofil kann Teil des Bewegungsablaufs sein. Der Bewegungsablauf für die Läufer weist somit einen oder mehrere Bereiche auf, in denen die Bewegung der Läufer durch ein Bewegungsprofil vorgegeben ist.

Der Steuereinrichtung des Linearantriebs nimmt das Bewegungsprofil auf und bearbeitet es dergestalt, dass Steuerbefehle zur Ansteuerung des jeweiligen Segments bereitgestellt werden. Die Läufer bewegen sich dann anhand der Steuerbefehle auf den Segmenten und/oder auf dem Förderband oder eines anderen Transportmediums oder Puffers.

Beim Betrieb des Linearantriebs anhand der Vorgaben aus dem Projektgenerator oder der Steuereinrichtung werden die Läufer auf den Segmenten von (Maschinen-) Station zu (Maschinen-) Station überführt. Eine (Maschinen-) Station nimmt von den Läufern eine vorgesehene Anzahl von Läufern auf. Die Läufer durchlaufen im Einflussbereich der (Maschinen-) Station das jeweilig vorgesehene Bewegungsprofil. Nach Ablauf des Bewegungsprofils durch die Läufer werden die Läufer wieder aus dem Einflussbereich der (Maschinen-) Station ausgegeben. Nach Ausgabe der Läufer aus dem Einflussbereich der (Maschinen-) Station werden die Läufer in einen Transportbereich oder einen Puffer überführt und/oder in den Einflussbereich der nächsten (Maschinen-) Station überführt.

### 5. Computerprogrammprodukt

Das Computerprogrammprodukt ist vorteilhaft als Engineering-Programm ausgestaltet. Das Computerprogramm ist zur Durchführung des Verfahrens auf einer Recheneinheit installiert. Die Recheneinheit ist vorteilhaft mit der Steuereinrichtung für den Linearantrieb verbunden. Das Computerprogrammprodukt kann auch auf der Steuereinrichtung installiert sein und auf der Steuereinrichtung ablaufen.

Beispielhaft entspricht die erste Station einer Abfüllanlage, die zweite Station einer Etikettier-Vorrichtung und die dritte Station einer Verpackungs-Vorrichtung. Vorteilhaft ist der Linearantrieb, insbesondere deren Läufer, zur Positionierung von zu befüllenden Gefäßen in einer Abfüllanlage verwendbar.

Als Beispiel für eine industrielle Anlage wird insbesondere eine Anlage zur Herstellung, zum Befüllen oder zur Verpackung dienen mit einem hier beschriebenen Linearantrieb verstanden.

### 6. Vorteilhafte Ausgestaltungen und Weiterbildungen

Bei einer vorteilhaften Ausgestaltung des Verfahrens wird der Bewegungsablauf der Steuereinrichtung des Linearantriebs bereitgestellt.

Durch die Bereitstellung des Bewegungsablaufs an die Steuereinrichtung kann die Steuereinrichtung ohne komplexe Programmierung den Betrieb beginnen. Vorteilhaft weist der Bewegungsablauf neben der Information zur Bewegung der Läufer Informationen zur Initialisierung der Achsen oder sonstiger Technologieobjekte (Abbildungen von Segmenten, (Maschinen-) Stationen, Transportbereichen wie Förderbänder oder Puffer sowie virtuelle Achsen, reale Achsen, Puffer, Stationen) auf. Bei einer vorteilhaften Ausgestaltung des Verfahrens erfolgt die Ermittlung des Bewegungsablaufs während des Betriebs des Linearantriebs.

Die Ermittlung des Bewegungsablaufs erfolgt während der Bewegung der Läufer des Linearantriebs. Die Vorgabe des Bewegungsprofils erfolgt somit dynamisch, je nachdem, welche Station zur Aufnahme von Läufern bereit ist.

Wenn eine Station kurzfristig nicht zur Aufnahme von Läufern bereit ist, kann die Ermittlung des Bewegungsablaufs vorteilhaft modifiziert werden. Beispielsweise wird ein Läufer einer anderen Station zugeordnet. Eine solche Auswahl ist vorteilhaft durch eine Auswahl bei der Einrichtung schon vorbereitet. Der nachfolgende Bewegungsablauf ist daher modifiziert. Daher ist eine dynamische Berechnung von dem Bewegungsablauf geeignet, um auch bei Änderungen bei den Stationen und/oder bei der Anzahl von Läufern ein bestmögliches Ergebnis zu erreichen.

Die Ermittlung des Bewegungsprofils erfolgt vorteilhaft in der Steuereinrichtung.

Vorteilhaft dienen Positionssensoren zur Bestimmung der Position der Läufer und die Ist-Positionen der Läufer werden an die Steuereinrichtung übertragen. Anhand der Ist-Positionen der Läufer wird die Ermittlung des Bewegungsablaufs unterstützt.

Bei dieser Ausgestaltung kann der Bewegungsablauf eine Vorgabe sein, in welcher Weise sich die Läufer in einem folgenden Zeitabschnitt (z.B. einer Sekunde oder bis zur nächsten notwendigen Änderung des Bewegungsablaufes) bewegen. Nach Ablauf des Zeitabschnitts kann ein neuer Bewegungsablauf vorgesehen und/oder bereitgestellt werden.

Bei einer weiteren vorteilhaften Ausgestaltung des Verfahrens erfolgt die Abfolge der Läufer durch die jeweilige Station anhand von Aufnahmekapazitäten der einzelnen Stationen und/oder der Transportbereiche.

Unter einer Aufnahmekapazität wird die Möglichkeit einer Station oder eines Transportbereiches zur Aufnahme eines Läufers verstanden. Übertragen auf das o.g. Verfahren kann die Aufnahmekapazität als Randbedingung einer Station oder einem Transportbereich zugeordnet werden. Die Aufnahmekapazität kann aus einer (vorgegebenen) maximalen Aufnahmekapazität abzüglich der Anzahl der bereits zugewiesenen Läufer/virtueller Achsen berechnet werden.

So kann ein Läufer (virtuelle Achse) bei mangelnder Aufnahmekapazität einer ersten Station einer weiteren Station zugeführt werden.

Der Läufer dient meist zur Positionierung oder zum Transport eines Gutes oder eines Werkstückes. Der Läufer in dem Verfahren zur Ermittlung des Bewegungsprofils kann als logisches Objekt, insbesondere als lineare Achse, aufgefasst werden.

Unter einem logischen Objekt, entsprechend jeweils der Station oder der virtuellen Achse, kann ein Software-Projekt analog einer objektorientierten Programmierung mit zugewiesenen Eigenschaften und/oder Parametern verstanden werden.

Durch die Abstimmung der Ausgangsbedingungen und Eingangsbedingungen der jeweiligen Station ist eine vereinfachte Berechnung des Bewegungsablaufes für die Läufer des Linearantriebs möglich.

Bei einer weiteren vorteilhaften Ausgestaltung des Verfahrens werden die von einer der Stationen ausgegebenen Läufer von zumindest einer der weiteren Stationen oder einem Transportbereich aufgenommen.

In dieser Ausgestaltung durchlaufen die Läufer nachfolgend die ihnen zugewiesenen Stationen. Durch diese Ausführung wird bei der Ermittlung des Bewegungsprofils das Szenario nachgebildet, dass die Läufer des Linearantriebs von einer Station an die weitere Station übergeben werden. So kann eine vereinfachte Programmierung, analog eines Petri-Netzes, erfolgen. Es muss keine ausführliche Beschreibung der Läufer außerhalb der Stationen vorgegeben werden. Weiter ist nur noch die Anzahl der Läufer wesentlich, die in die Station aufgenommen werden sollen. Eine permanente Zuweisung einer Adresse für den jeweiligen Läufer kann somit entfallen.

Vorteilhaft kann jedoch die Zuweisung einer Adresse für einen Läufer zur späteren individuellen Aufgabenzuweisung für einen Läufer vorgesehen sein.

Bei einer weiteren vorteilhaften Ausgestaltung des Verfahrens gibt das Bewegungsprofil an, wie die Läufer die jeweilige Station zwischen Aufnahme der Läufer und Abgabe der Läufer durchfahren.

Der Läufer, welcher in einem bestehenden Linearantrieb von einer Maschinenstation aufgenommen worden ist, durchläuft eine Bewegung, die von dem Bewegungsprofil vorgegeben ist. Nach Durchlauf der Bewegung wird der Läufer wieder aus der Maschinenstation ausgegeben. Diese Bewegung wiederholt sich meist zyklisch bei den aufgenommenen Läufern.

Bei der Ermittlung des Bewegungsablaufs werden das Bewegungsprofil oder mehrere Bewegungsprofile zu unterschiedlichen Betriebszuständen der jeweiligen Station zugeordnet. Das Bewegungsprofil wird dergestalt ermittelt, dass die aufgenommenen Läufer regelmäßig anhand desselben Bewegungsprofils bewegt werden. Nach Ausgabe der Läufer werden der Station wiederholt Läufer zugewiesen und diese in der Station zugeordnet.

Durch diese Ausgestaltung können vereinfacht wiederkehrende Bewegungen von Läufern in dem Linearantrieb ermittelt bzw. programmiert werden.

Bei einer weiteren vorteilhaften Ausgestaltung des Verfahrens wird das Bewegungsprofil anhand von möglichen vorbereiteten (Teil-)Bewegungsprofilen ausgewählt.

Die Auswahl von möglichen Bewegungsprofilen wird vorzugsweise aus einer vorbereiteten Auswahl von möglichen Bewegungsprofilen bereitgestellt. Die möglichen Bewegungsprofile können an einzelne Randbedingungen geknüpft sein. So kann beispielhaft ein alternatives Bewegungsprofil ausgewählt werden, das nur eine reduzierte Anzahl von Läufern für die Maschinenstation berücksichtigt, falls erkannt wird, dass nicht genügend Läufer für eine Maschinenstation bereitstehen. Eine weitere Randbedingung für das alternative Bewegungsprofil kann sein, dass die Maschinenstation nicht ordnungsgemäß funktioniert und daher gemäß den Randbedingungen das alternative Bewegungsprofil durchlaufen werden muss.

Durch die Vorgabe einer Auswahl von Bewegungsprofilen kann eine dynamische Anpassung an unvorhergesehenen Gegebenheiten erfolgen, ohne dass ein händisches Eingreifen in den Ablauf des Linearantriebs oder in die Ermittlung des Bewegungsablaufs für den Linearantrieb notwendig ist.

Bei einer weiteren vorteilhaften Ausgestaltung des Verfahrens wird das Bewegungsprofil in der Station als Kurvenscheibenfunktion, insbesondere abhängig von einer (virtuellen) Masterachse, vorgegeben.

Eine Kurvenscheibenfunktion ist eine Bewegungsvorschrift für eine periodisch verlaufende Bewegung. Vorteilhaft durchlaufen die Läufer nach Aufnahme durch die Maschinenstation dieselbe Bewegung wie die Läufer, welche bereits ausgegeben worden sind.

Durch die Vorgabe der Bewegungsprofile als Kurvenscheibenfunktionen können einfach wiederkehrende Bewegungen beschrieben werden. Weiter kann ggf. auf schon vorhandene Kurvenscheibenfunktionen zurückgegriffen werden.

Bei einer weiteren vorteilhaften Ausgestaltung des Verfahrens erfolgt eine Berechnung des Bewegungsablaufs anhand einer zeitlichen Abfolge der Läufer durch die Stationen.

Die Läufer durchlaufen vorteilhaft mehrere Maschinenstationen nacheinander. Beispielhaft ist durch die Bearbeitung von Gütern oder Werkstücken, die auf den Läufern positioniert werden sollen, vorgegeben, welche Maschinenstationen nachfolgend durchlaufen werden müssen. Diese Abfolge kann auch den Läufern zugewiesen werden, die bei der Ermittlung des Bewegungsablaufs den Stationen in einer vorbestimmten Art und Weise durch die Abfolge zugewiesen werden. In Verbindung der Eingangsbedingungen und der Abfolge kann der Durchlauf der Läufer durch die Station analog eines Petri-Netzwerkes beschrieben werden.

Durch die Vorgabe der Abfolge kann besonders einfach eine Ermittlung des Bewegungsprofils erfolgen.

In einer bevorzugten Ausgestaltung des Verfahrens wird der Bewegungsablauf durch Aufnahmekapazitäten einzelner Stationen vorgegeben. Dabei ermittelt sich die dynamische Vorgabe anhand einer momentanen Aufnahmekapazität.

Die Aufnahmekapazität der Stationen ist normalerweise eine feste Größe, die der Station beigeordnet ist. Beispielhaft können eine vorgegebene Anzahl von n virtuelle Achsen einer Station zugeordnet werden, was einer Zuordnung von n Läufern für eine Maschinenstation entspricht.

Durch die dynamische Bestimmung des Bewegungsablaufs anhand von Aufnahmekapazitäten kann vorteilhaft zu einer dynamischen Bestimmung des Bewegungsablaufs und somit zu einer breiten Anwendung des Linearantriebs und des Verfahrens herangezogen werden.

Bei einer weiteren vorteilhaften Ausgestaltung des Verfahrens wird die Position der Stationen bei dem Linearantrieb anhand der Abfolge der Aufnahme und Abgabe der Läufer von den Stationen ermittelt.

Gemäß der Abfolge der durchlaufenen Stationen und der Herkunft der Läufer, beispielsweise von einem Förderband an einer Seite angrenzend an eine Mehrzahl von Segmenten, müssen die Läufer ggf. auf dem Linearantrieb hin- und her bewegt werden. Bei einer optimalen Wahl der Position der Stationen kann diese Bewegung der Läufer verkürzt werden. Daher eignet sich eine Optimierung, die je nach Anordnung und/oder Position der Stationen die Wege als Summe der Wege der einzelnen Läufer zu einem Minimum hin optimiert.

Durch diese variable Anordnung, insbesondere der Position und/oder Abfolge der Stationen kann eine industrielle Anlage besonders effizient geplant und in Betrieb gesetzt werden.

Bei einer weiteren vorteilhaften Ausgestaltung des Verfahrens wird der Bewegungsablauf durch die Aufnahmekapazitäten der einzelnen Stationen dynamisch vorgegeben, wobei sich die dynamische Vorgabe anhand einer momentanen (dynamischen) Aufnahmekapazität der Stationen ermittelt.

Während der Laufzeit des Linearantriebs kann es vorkommen, dass eine Maschinenstation, entgegen der Vorgabe, zumindest zeitweise keine Aufnahmekapazität für Läufer aufweist. Dieser Mangel an Aufnahmekapazität wird an die Steuereinrichtung übermittelt. Die Steuereinrichtung kann dann die Aufnahmekapazität der Station modifizieren. Die Modifikation führt zu einer dynamischen Anpassung des Bewegungsablaufs. Anhand des angepassten Bewegungsablaufs werden die Läufer anders auf den Segmenten angesteuert. Die Anpassung kann bereichsweise durch eine Auswahl vorgegeben werden.

Vorteilhaft kann so eine besonders einfache dynamische Anpassung des Bewegungsprofils an eine geänderte Ausgangsbedingung erfolgen.

Bei einer weiteren vorteilhaften Ausgestaltung des Verfahrens werden Randbedingungen und/oder Startbedingungen in dem Bewegungsablauf berücksichtigt.

Als Startbedingung kommt eine jeweilige Position der Läufer auf den Segmenten bzw. auf dem Förderband und optional eine Geschwindigkeit zu einem Anfangszeitpunkt t-0 in Betracht.

Weiter können auch eine Mehrzahl von Läufern auf einem Förderband bereit stehen und, analog wie aus einem Reservoir, nacheinander auf die Segmente übertragen werden. So entsteht ein Pool von Läufern auf einer Seite des Linearantriebs, der nacheinander mit Hilfe des Linearantriebs durch die einzelnen Stationen bewegt werden kann und an einer weiteren Stelle von dem Linearantrieb ausgegeben werden können.

Als Randbedingungen können auch maximale Bewegungsparameter (minimale bzw. maximale Geschwindigkeit der Läufer auf dem Linearantrieb oder Förderband, maximale Krafteinwirkung, zulässige Beschleunigung, zulässiger Ruck usw.) bei der Ermittlung des Bewegungsablaufs berücksichtigt werden.

Durch die Vorgabe von Anfangsbedingungen bzw. von Randbedingungen kann ein besonders schonender Ablauf der Bearbeitung der Werkstücke oder Güter auf den Läufern des Linearantriebs garantiert werden.

Bei einer weiteren vorteilhaften Ausgestaltung des Verfahrens wird die Startbedingung als Position der Läufer zu einem Anfangszeitpunkt vorgegeben.

Als Anfangszeitpunkt eignet sich ein Startzeitpunkt beim Anfang des Betriebes der Bewegung der Läufer auf dem Linearantrieb. Ein solcher Anfangszeitpunkt kann auch periodisch vorgegeben werden, insbesondere nach einem Durchlauf einer Mehrzahl von Läufern. Die Position der Läufer kann durch eine Zuordnung der Läufer auf ein Segment oder ein Förderband erfolgen. Bei einem Bewegungsablauf, der eine periodische Bewegung beschreibt, kann durch Vorgabe einer Startbedingung überprüft werden, ob die Bewegung in vorgesehener Weise erfolgte. Somit kann einer auftretenden Abweichung im Betriebsablauf schnell entgegengewirkt werden.

Bei einer weiteren vorteilhaften Ausgestaltung des Verfahrens sind die Läufer nach Aufnahme in die Station mit einer jeweiligen Adresse versehen.

Nach Aufnahme sind die Läufer vorteilhaft mit einer Adresse oder Kennung versehen, so dass im Einflussbereich der Station (bzw. der Maschinenstation) eine eindeutige Zuordnung der Läufer möglich ist.

Entweder ist dem Läufer eine Adresse fest zugeordnet oder die Adresse wird jeweils bei der Aufnahme oder nach der Aufnahme des Läufers in die Maschinenstation zugeordnet.

Vorteilhaft können auch Läufer mit unterschiedlichen Werkstücken oder Gütern eine unterschiedliche Kennung oder Adresse erhalten. Diese Kennung oder Adresse kann sowohl dynamisch vorgegeben werden oder fest den Läufern zugeteilt sein.

Vorteilhaft kann ein Läufer auch eine feste Kennung aufweisen, wobei anhand der Kennung des Läufers die Zuweisung einer Adresse durch die Station (bei dem realen Linearantrieb: durch die Maschinenstation) erfolgt. So können unterschiedliche Läufer und/oder Läufer mit unterschiedlichen Gütern oder Werkstücken auseinander gehalten werden. Läufer mit unterschiedlichen Kennungen und/oder Werkstücken bzw. Gütern in dem Einflussbereichen werden vorteilhaft unterschiedlich behandelt.

Bei dem Verfahren zur Ermittlung wird vorteilhaft die Ausführung der Adressierung der Läufer vorgegeben.

Bei einer weiteren vorteilhaften Ausgestaltung des Verfahrens gruppiert das Bewegungsprofil und/oder der Bewegungsablauf eine Mehrzahl von Läufern. Alternativ oder zusätzlich beschreibt das Bewegungsprofil und/oder der Bewegungsablauf die Bewegung von einem der Läufer in Abhängigkeit von einem der anderen Läufer.

Unter einer Gruppe von Läufern wird hier eine Gruppe von Läufern verstanden, für die zu einer Station ein zumindest ähnliches Bewegungsprofil zugeordnet ist. So kann für eine Mehrzahl von gruppierten Läufern ein Gleichlauf mit einem Abstand der jeweiligen Läufer beschreiben. Eine solche Bewegung von Läufern kann auch als parallele Bewegung der Läufer angesehen werden. Weiter kann auch ein Antiparallele oder eine gegenartige Bewegung von jeweils zwei Läufern erfolgen. Beispielhaft für eine gegenartige Bewegung ist: Bewegt sich ein Läufer in eine Richtung, bewegt sich ein anderer Läufer in eine andere Richtung.

Durch eine solche gekoppelte Bewegung von Läufern kann sich ein Schwarmverhalten einer Mehrzahl von Läufern auf dem Linearantrieb durch den Bewegungsablauf vorgegeben werden.

Besonders vorteilhaft kann durch Vorgabe einer gruppierten Bewegung von Läufern ein Bewegungsprofil für eine Mehrzahl von Läufern eingesetzt werden.

Bei einer weiteren vorteilhaften Ausgestaltung des Verfahrens nimmt die jeweilige Station auch eine reduzierte Anzahl von Läufern nach Ablauf einer vorbestimmten Zeit auf.

Gemäß der modifizierten Ausführungsform des Verfahrens zur Ermittlung eines Bewegungsablaufs wird der Fall betrachtet, dass für eine Station nicht die vorgesehene Anzahl von Läufern zur Verfügung steht.

Nach Ablauf einer vorbestimmten Zeit, ist gemäß dem modifizierten Verfahren die Aufnahme der reduzierten Anzahl von Läufern durch die Station vorgesehen. Der Station ist für diesen Fall ggf. ein modifiziertes Bewegungsprofil zugeordnet.

Bei dieser Ausführung kann auch eine Funktion einer industriellen Anlage im Falle eines teilweisen Ausfalls einer Maschinenstation gewährleistet sein.

Bei einer vorteilhaften Ausgestaltung des Computerprogrammprodukts unterstützt das Computerprogrammprodukt die Steuerung der Bewegung von Läufern auf dem Linearantrieb, indem das Computerprogrammprodukt
- zur Initialisierung von technologischen Objekten, insbesondere virtuellen Achsen, Stationen, realen Achsen sowie Abbildungen von Segmenten, Maschinenstationen, Puffern, Läufern, Transportbereichen, Förderbänder, vorgesehen ist,
- und/oder zur Vorgabe der Anordnung von Segmenten und der Stationen vorgesehen ist.

Das Computerprogramm kann als ein Projektgenerator ausgestaltet sein. Das Computerprogramm dient vorteilhaft zur Initialisierung von virtuellen Achsen, Segmenten, Maschinenstationen, Läufern, Förderbändern und Steuereinheiten als technologische Objekte. Die technologischen Objekte können an die Steuereinrichtung übertragen werden. Initialisierung heißt hier die Anlage von Daten, welche mit den Eigenschaften von den hier ausgeführten technologischen Objekten (allgemein auch als Technologieobjekte oder logische Objekte bezeichnet) beaufschlagt werden können.

Durch das gleichzeitige Erzeugen eines Bewegungsablaufs und durch Initialisierung der technologischen Objekte ist eine Planung und Programmierung des Linearantriebs und/oder der industriellen Anlage einfach und fehlerfrei möglich.

Bei einer weiteren vorteilhaften Ausgestaltung des Verfahrens dient zur Eingabe von Bewegungsprofilen oder zur Vorgabe von Technologieobjekten eine Hochsprache. Unter einer Hochsprache kann insbesondere eine Skriptsprache verstanden werden.

Eine Hochsprache wird in diesem Zusammenhang als eine funktionelle Sprache bezeichnet, welche angepasst ist, einen Bewegungsablauf möglichst effizient zu programmieren. Eine Hochsprache kann hierzu speziell ausgestaltete Befehle aufweisen, analog einem Unterprogramm. Vorteilhaft weisen die Befehle Möglichkeiten auf, Parameter oder Zusammenhänge zu integrieren.

Weiter kann eine Vielzahl von möglichen Bewegungsabläufen vorgegeben sein. Die Vielzahl der möglichen Bewegungsabläufe steht vorteilhaft in einer Auswahl bereit. Bei einer dynamischen Änderung kann auf einen alternativen Bewegungsablauf zurückgegriffen werden.

Weiter können Teilbewegungsprofile in einer Auswahl vorgegeben sein. Die Teilbewegungsprofile können dynamisch zu Bewegungsprofilen zusammengesetzt werden. Durch die Bereitstellung von Teilbewegungsprofilen kann die Ermittlung von Bewegungsprofilen vereinfacht werden. Die Steuereinrichtung oder ein Benutzer gibt die Auswahl vor der Laufzeit als eine Auswahl vor.

Vorteilhaft werden mangelnde Aufnahmekapazitäten der Maschinenstationen an die Steuereinrichtung gemeldet. Die Steuereinrichtung kann daraufhin den Bewegungsablauf modifizieren. Somit erfolgt ein Zusammenspiel des Linearantriebs und der Steuereinrichtung, wobei die Steuereinrichtung den Bewegungsablauf ermittelt.

Es ist auch möglich, bei einer Änderung einer Aufnahmekapazität einer Maschinenstation die Änderung an die Station zu übertragen bzw. der Station zuzuweisen. Dann wird der Bewegungsablauf weiter mit einer veränderten Station (mit der veränderten Aufnahmekapazität einer Station) dynamisch ermittelt. Anstelle von einer Aufnahmekapazität können auch weitere Größen, wie das Bewegungsprofil oder eine sonstige Randbedingung, geändert werden.

Nach der Berechnung eines geänderten Bewegungsprofils kann dieser bis zur nächsten Änderung zur Vorgabe der Bewegung der Läufer auf dem Linearantrieb dienen.

In der besonders bevorzugten Ausgestaltung des Verfahrens wird der Bewegungsablauf laufend aufgrund der vorliegenden Bedingungen, wie Position der Läufer des Linearantriebs, Aufnahmekapazität der Maschinenstation, Zustand der Maschinenstation, momentane Geschwindigkeit der Läufer, ermittelt.

Dabei können die Position und/oder die Geschwindigkeit der Läufer fortwährend zur Laufzeit des Linearantriebs ermittelt und an die Steuereinrichtung übertragen werden. Weiter können die Betriebszustände der Maschinenstationen ermittelt und der Steuereinrichtung zur Verfügung gestellt werden. Die Betriebszustände der Maschinenstationen werden den Stationen zugewiesen. Die Geschwindigkeit und/oder die Position der Läufer können den virtuellen Achsen zugeordnet werden. Aus den vorstehend genannten Parametern/Größen wird der Bewegungsablauf fortwährend ermittelt. Er kann auch jeweils für eine kurze Zeitdauer vorausberechnet werden. Anhand des Bewegungsablaufs steuert und/oder regelt die Steuereinrichtung die Bewegung der Läufer des Linearantriebs.

Aus den ermittelten Größen (Position/Geschwindigkeit der Läufer, Betriebszustand der Maschinenstationen,...) kann vorteilhaft eine dynamische Ermittlung des Bewegungsablaufs berechnet werden.

Im Folgenden wird die Erfindung anhand von Figuren näher beschrieben und erläutert. Dabei sind die in den Figuren gezeigten Merkmale vom Fachmann zu neuen Ausführungsformen der Erfindung kombinierbar. Es zeigen:
- FIG 1: die Vorgaben für den Projektgenerator,
- FIG 2: ein Verfahren zur Ermittlung des Bewegungsprofils,
- FIG 3: ein Verfahren zur Steuerung und/oder Regelung des Linearantriebs
- FIG 4: den Betrieb des Linearantriebs,
- FIG 5: ein modifiziertes Verfahren beim Betrieb eines Linearantriebs sowie
- FIG 6: einen Vergleich des Linearantriebs und dem Computer-programmprodukt oder dem Projektgenerator.

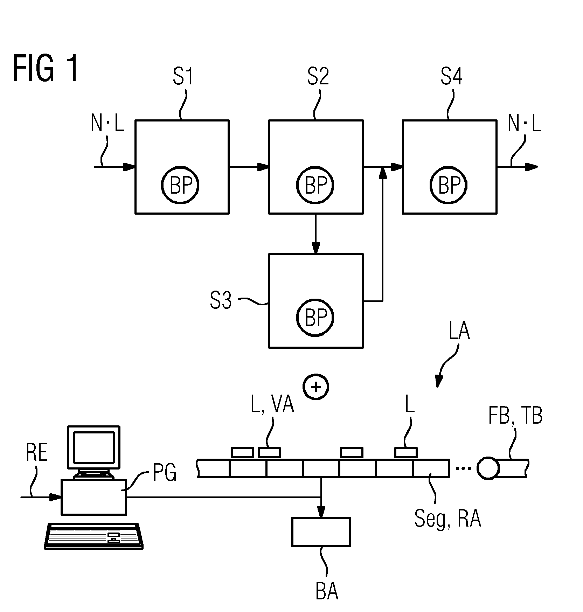

FIG 1 zeigt die Vorgaben für den Projektgenerator PG. Die hier dargestellten Vorgaben werden vorteilhaft von einem Benutzer in einen Projektgenerator eingegeben, wobei der Projektgenerator ein Teil eines Engineering-Programms ist. Oben gezeigt sind die verschiedenen Stationen S1, S2, S3, S4, wobei die Stationen S1, S2, S3, S4 Abbilder von Maschinenstationen MS1, MS2, MS3 oder Segmenten Seg, sind. Der Station S1, S2, S3, S4 sind jeweils ein Bewegungsprofil BP zugeordnet. Das Bewegungsprofil BP gibt an, wie sich Läufer L, die sich im Einflussbereich der Station S1, S2, S3, S4 befinden, bewegen. Die Stationen S1, S2, S3, S4 weisen jeweils als Eingangsbedingung eine vorgesehene Anzahl n von Läufern auf, wobei die Station S1, S2, S3, S4 die vorgesehene Anzahl n der Läufer L aufnimmt, sobald die vorgesehene Anzahl n der Läufer L bereit steht. Nach Ablauf des jeweiligen Bewegungsprofils BP der Station S1, S2, S3, S4 werden die Läufer L der nächsten Station S1, S2, S3, S4 zur Verfügung gestellt. Neben der Vorgabe der einzelnen Stationen S1, S2, S3, S4 sowie der jeweiligen Bewegungsprofile BP können zusätzlich Abfolgen von Stationen S1, S2, S3, S4 vorgegeben werden, welche der jeweilige Läufer L durchläuft. Vorteilhaft kann auch ein Teiltransfer der Läufer L in den Einflussbereich der (Maschinen-) Station S1, S2, S3, S4 erfolgen. Ein Teiltransfer der Läufer L erfolgt dann, falls nicht die ausreichende Anzahl von Läufern L zur Verfügung steht. Falls nicht ausreichend Läufer L zur Verfügung stehen, kann eine vorgegebene Zeit abgewartet und im Anschluss die nicht ausreichende Anzahl der Läufer in den Einflussbereich der Maschinenstation überführt werden.

Als weitere Vorgabe wird ein vorgesehener Aufbau des Linearantriebs LA beschrieben. Der Linearantrieb LA weist hierbei Segmente Seg auf, wobei die Segmente Seg sequenziell aneinander angeordnet sind. Der Linearantrieb LA weist weiter eine Mehrzahl von Läufern L auf, wobei die Läufer L auf den Segmenten Seg bewegt werden. Weiter weist der Linearantrieb LA ein Förderband FB auf, welches neben den Segmenten Seg positioniert ist und zur Aufnahme der Läufer L von den Segmenten Seg ausgestaltet ist. Die Läufer L werden bei der Ermittlung des Bewegungsablaufs BA für die Läufer L als virtuelle Achsen VA angesehen. Ein Segment wird dagegen bei der Vorgabe des Bewegungsablaufs BA als reale Achse RA angesehen. Insbesondere das Förderband FB wird bei der Ermittlung des Bewegungsablaufs BA als Transportbereich TB angesehen. Anhand der vorstehend ausgeführten Vorgaben wird auf einer Recheneinheit RE mit Hilfe des Projektgenerators PG, der auf eine Recheneinheit RE oder einer Steuereinrichtung SE abläuft, der Bewegungsablauf BA ermittelt.

Das Förderband FB ist dabei als optional und nicht erfindungswesentlich anzusehen. Die Läufer L können bspw. auch durch andere Vorrichtungen auf das Anfangssegment gebracht bzw. von diesem abgenommen werden, bspw. mittels eines Handlingsautomaten. Insbesondere wäre auch denkbar, dass der segmentierte Linearantrieb LA ringförmig ausgestaltet und somit komplett geschlossen ist und somit kein Förderband FB zwingend erforderlich ist.

In einer der vorteilhaften Ausgestaltung erfolgt mit Hilfe des Projektgenerators PG anhand der vorstehenden Angaben nur eine Vorbereitung der Ermittlung des Bewegungsablaufs BA. Die eigentliche Ermittlung des Bewegungsablaufs BA erfolgt durch die Steuereinrichtung SE, wobei die Steuereinrichtung SE zur Steuerung und/oder Regelung des Linearantriebs LA vorgesehen ist. Vorteilhaft kann so der Bewegungsablauf online, also an die jeweiligen Betriebszustände des Linearantriebs LA und/oder der Maschinenstationen MS1, MS2 angepasst erfolgen. Die Ermittlung des Bewegungsablaufs kann hierbei in Echtzeit erfolgen.

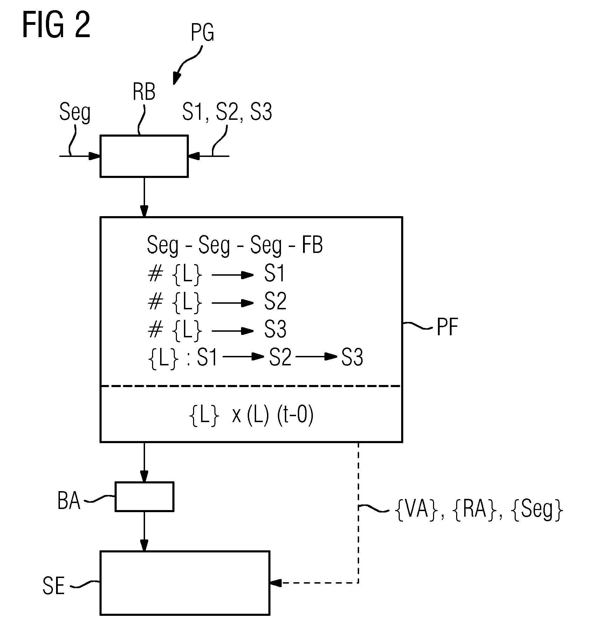

FIG 2 zeigt ein Verfahren zur Ermittlung des Bewegungsablaufs BA. In dem Projektgenerator PG werden die Stationen S1, S2, S3 sowie die Segmente Seg als Elemente oder logische Einheiten vorgegeben. Weiter werden Randbedingungen bzw. Startbedingungen RB vorgegeben, wobei die Rand- oder Startbedingungen den Ort der Läufer L zu einem Anfangszeitpunkt t-0 vorgeben. Diese Vorgabe kann durch Eingabe in den Projektgenerator PG erfolgen.

Die Vorgaben, die ein Benutzer im Projektgenerator PG angibt, werden in einer weiteren Programmfunktion PF folgendermaßen zusammengesetzt: Zunächst wird der Aufbau des Linearantriebs LA beschrieben. Hierzu werden die einzelnen Segmente Seg in ihrer Position und in ihrem Zusammenspiel definiert. Weiter werden die Segmente im Wechsel zu dem zumindest einen Förderband FB vorgegeben, wobei das Förderband wie oben angegeben, als optional angesehen wird. In einem weiteren Schritt werden die Eingangsbedingungen für die Stationen S1, S2, S3 vorgegeben, wobei als Eingangsbedingungen eine Anzahl von Läufern L vorgegeben wird. Weiter wird für den jeweiligen Läufer L ein Ablaufprofil vorgegeben, wobei das Ablaufprofil angibt, in welcher Reihenfolge der jeweilige Läufer L die Stationen S1, S2, S3 durchläuft. Optional kann die Rand- bzw. Startbedingung vorgegeben werden. Rand- oder Startbedingung RB beschreibt beispielsweise die Position x des Läufers L zu einem Startzeitpunkt t-0.

Aus den hier beschriebenen Vorgaben berechnet die Programmfunktion PF den Bewegungsablauf BA. Der Bewegungsablauf BA wird entweder an die Steuereinrichtung SE des Linearantriebs LA übertragen oder in der Steuereinrichtung SE des Linearantriebs, vorzugsweise in Echtzeit, ermittelt.

Weiter kann der Projektgenerator PG ausgestaltet sein, um auf die Steuereinrichtung SE des Linearantriebs LA zuzugreifen. Der Zugriff dient zur Initialisierung von virtuellen Achsen VA, realen Achsen RA sowie Segmenten Seg in der Steuereinrichtung SE. Virtuelle Achsen VA beschreiben die Bewegung eines Läufers L auf den Segmenten Seg. Eine reale Achse RA sind Befehle für die Steuereinheit U, das Förderband FB und/oder das Segment Seg. Die Befehle für die Steuereinheit U und/oder das Segment Seg bilden vorteilhaft die Bewegung der Läufer auf einem Segment Seg ab.

Weiter werden die Segmente Seg und/oder die Steuereinheiten U selbst initialisiert. Bei den Segmenten kann die Adresse, die Größe und/oder die Bauart durch die Initialisierung vorgegeben werden. Weiter können auch die Schnittstellen zur Verbindung der Steuereinrichtung SE und der Steuereinheiten U initialisiert werden.

Durch die Initialisierung vom Projektgenerator kann vorteilhaft die Steuereinrichtung durch Übertragung eines vollständigen Bewegungsablaufes BA sowie eines vorkonfigurierten Systems in den Zustand der Fähigkeit der Steuerung und/oder Regelung des Linearantriebs LA versetzt werden.

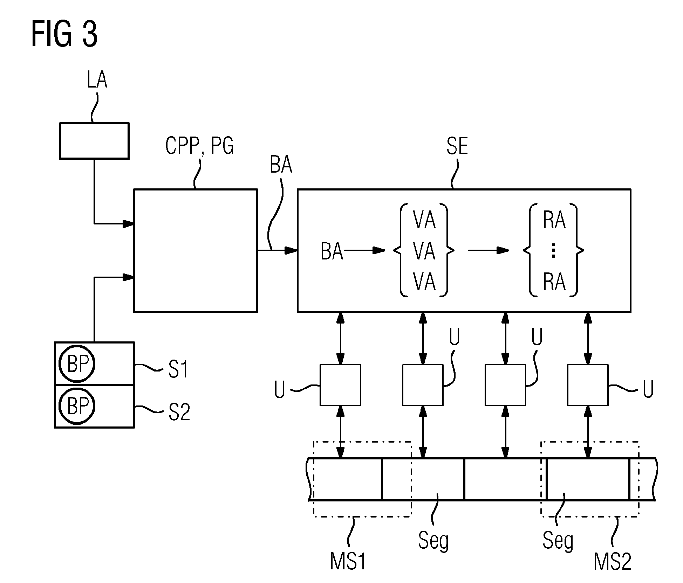

FIG 3 zeigt ein Verfahren zur Steuerung und/oder Regelung des Linearantriebs LA. Bei der Darstellung werden ein Verfahren zum Betrieb der Bereitstellung des Bewegungsablaufs BA und ein Verfahren zur Steuerung und/oder Regelung eines Linearantriebs LA kombiniert. Der Bewegungsablauf BA wird entweder im Projektgenerator PG oder in einem Computerprogrammprodukt CPP, welches auf einer Recheneinheit RE installiert und ablauffähig ist, ermittelt. Hierbei bildet die Programmfunktion PF einen Teil des Computerprogrammproduktes.

Hierbei werden dem Projektgenerator PG Vorgaben für den Linearantrieb LA und für die Stationen S1, S2, mit den jeweiligen Bewegungsprofilen BP vorgegeben. Die Vorgaben werden vorteilhaft von einem Benutzer mit Hilfe eines Engineering-Programms in eine Recheneinheit RE eingegeben. Der Projektgenerator PG stellt den Bewegungsablauf BA für die Steuereinrichtung SE und/oder die mindestens eine Steuereinheit U des Linearantriebs LA bereit. Die Steuereinrichtung SE des Linearantriebs LA teilt den Bewegungsablauf BA auf virtuelle Achsen VA auf.

Virtuelle Achsen VA beschreiben die Bewegung eines Läufers L auf den Segmenten Seg des Linearantriebs LA. Virtuelle Achsen VA und reale Achsen RA können als logische Einheiten oder als technologische Objekte ausgeführt sein oder als solche beschrieben sein.

Die Steuereinrichtung SE überträgt die Steuerbefehle (entsprechend den realen Achsen RA) an die Steuereinheiten U und/oder an die Segmente. Die Segmente Seg dienen zur Bewegung der Läufer L von der ersten Maschinenstation MS1 zur zweiten Maschinenstation MS2. Die Maschinenstationen MS1, MS2 dienen zur Bearbeitung von Gütern, die auf den Läufern L positioniert sind. Die Läufer L führen in den Maschinenstationen MS1, MS2 die Bewegungen aus, die durch die Bewegungsprofile BP der Stationen S1, S2 vorgegeben werden. Das hier beschriebene Verfahren erlaubt eine einfache Steuerung oder Regelung der Läufer L auf den Segmenten Seg des Linearantriebs LA.

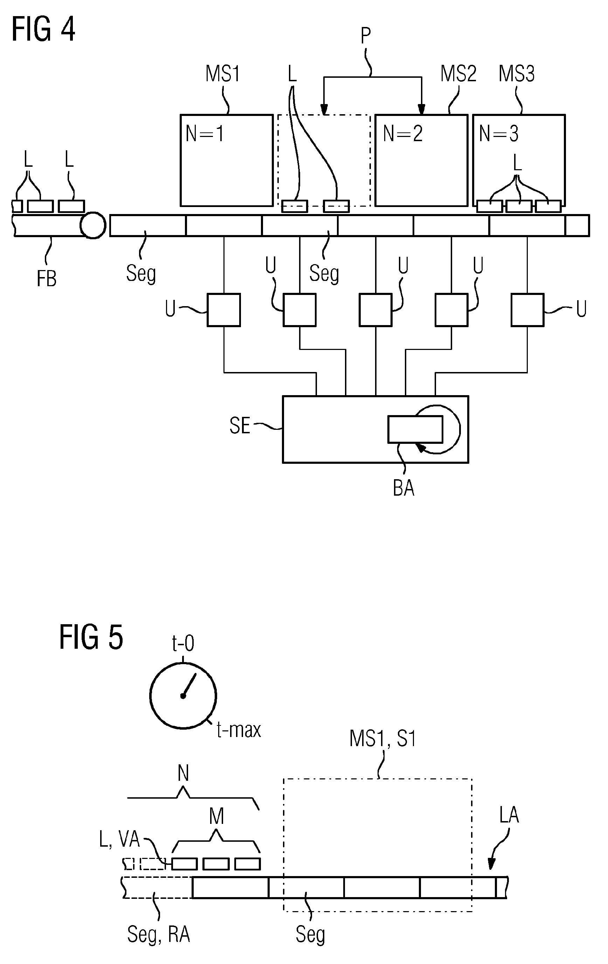

FIG 4 zeigt den Betrieb des Linearantriebs LA. Hier werden Läufer L gezeigt, die auf den Segmenten Seg angeordnet sind. Die Läufer L werden auf den Segmenten Seg bewegt. Weiter zeigt die Figur eine erste Maschinenstation MS1, eine zweite Maschinenstation MS2 und eine dritte Maschinenstation MS3. Die Maschinenstationen MS1, MS2, MS3 sind entlang der Segmente Seg des Linearantriebs LA angeordnet. Weiter werden Läufer L von einem Förderband FB bereitgestellt. Die Läufer L werden vom Förderband FB auf das Segment Seg überführt. In der Figur sind die Segmente Seg mit jeweils einer Steuereinheit U verbunden. Die Steuereinheiten U sind mit einer Steuereinrichtung SE verbunden. Die Steuereinrichtung SE stellt Steuerbefehle und/oder Regelbefehle für die Steuereinheiten U bereit.

In der gezeigten Ausführungsform sind die Maschinenstationen MS1, MS2, MS3 entlang der Segmente Seg verschiebbar und/oder austauschbar. Die Austauschbarkeit bzw. Verschiebbarkeit der Maschinenstationen MS1, MS2, MS3 ist durch einen Pfeil P symbolisiert.

Vor der zweiten Maschinenstation MS2 sind zwei Läufer L angeordnet. Die beiden Läufer L können von der ersten Maschinenstation MS1 ausgegeben worden sein. Sei die vorgesehene Anzahl N von Läufern L zwei, so können die Läufer L in einem folgenden Schritt von der ersten Maschinenstation MS1 oder der zweiten Maschinenstation MS2 aufgenommen werden. Bei der Bearbeitung des Gutes oder des Werkstücks, welches auf dem jeweiligen Läufer L positioniert ist, durchläuft der Läufer eine Bewegung, die durch das Bewegungsprofil BP vorgegeben worden ist und der jeweiligen Maschinenstation eigentümlich ist.

Die dritte Maschinenstation MS3 weist drei Läufer in ihrem Einflussbereich auf. Die drei Läufer L bewegen sich gemäß den Vorgaben des Bewegungsprofils BP auf den Segmente Seg, wobei diese Segmente Seg der dritten Maschinenstation MS3 zugeordnet sind.

Die erste Maschinenstation MS1 benötigt für ihre Funktion jeweils einen Läufer L, d.h. die Eingangsbedingung der ersten Maschinenstation MS1 ist eine vorgesehene Anzahl N von N=1.

Die zweite Maschinenstation MS2 benötigt für ihre Funktion jeweils zwei Läufer L, d.h. die Eingangsbedingung der zweiten Maschinenstation MS2 ist eine vorgesehene Anzahl N von N=2.

Die dritte Maschinenstation MS3 benötigt für ihre Funktion jeweils drei Läufer L, d.h. die Eingangsbedingung der dritten Maschinenstation MS3 ist eine vorgesehene Anzahl N von N=3.

Daher muss die erste Maschinenstation MS1 zwei Zyklen durchlaufen, um die Eingangsbedingung zu erfüllen, wenn beide Läufer L jeweils aus der ersten Maschinenstation MS1 in die zweite Maschinenstation überführt werden. Allgemein können die Läufer L vor der Maschinenstation MS1, MS2, MS3 positioniert werden oder gleich in den Einflussbereich der jeweiligen Maschinenstation MS1, MS2, MS3 überführt werden.

Die Läufer können auch direkt von dem Förderband FB in die jeweilige Maschinenstation MS1, MS2, MS3 überführt werden. Wie weiter oben schon im Zusammenhang mit FIG 1 erläutert wurde, das Förderband FB dabei als optional anzusehen.

Durch diese Ausführungsform ist eine effiziente und gleichzeitig vielseitig einsetzbare industrielle Anlage bereitgestellt.

Bei diesem Ausführungsbeispiel dient die Steuereinrichtung SE zur fortlaufenden (Neu-) Ermittlung des Bewegungsablaufs BA. Die Ermittlung des Bewegungsablaufs BA kann anhand von Vorgaben erfolgen, die von dem Linearantrieb LA und/oder von den Maschinenstation MS1, MS2 bereitgestellt werden. Vorgaben sind Auslastung der jeweiligen Maschinenstation, Position und/oder Geschwindigkeit der Läufer L. (Vorgesehene) Anzahl N der Läufer L vor oder im Einflussbereich der jeweiligen Maschinenstation MS1, MS2, MS3. So kann vorteilhaft eine fortlaufende Anpassung des Bewegungsablaufs BA, vorzugsweise in Echtzeit, erfolgen.

FIG 5 zeigt ein modifiziertes Verfahren beim Betrieb eines Linearantriebs LA. In der hier gezeigten materiellen Ausgestaltung des Linearantriebs LA stehen für die Maschinenstation MS1 nicht die vorgesehene Anzahl N von fünf Läufern L zur Verfügung. Es steht lediglich eine reduzierte Anzahl M von drei Läufern L bereit. Zwei Läufer L benötigt die Maschinenstation MS1 für den ordnungsgemäßen Betrieb.

In der virtuellen Welt des Computerprogrammproduktes CPP würde die Maschinenstation MS1 der Station S1 entsprechen, dem Segment Seg die reale Achse RA und dem Läufer L die virtuelle Achse VA. Daher die doppelte Wahl der jeweiligen Bezugszeichen.

In der hier gezeigten Ausführung des Verfahrens zum Betrieb eines Linearmotors wartet die Maschinenstation eine vorbestimmte Zeit t-max. Stehen bei Ablauf der vorbestimmten Zeit (von t-0) bis t-max nur eine reduzierte Anzahl M von Läufern L zu Verfügung, so wird die reduzierte Anzahl M der Läufer der Maschinestation MS1 zugeführt. Die Läufer L in der Maschinenstation MS1 und/oder die Maschinenstation durchlaufen in diesem Fall eine modifizierte Bewegung, vorgegeben durch ein modifiziertes Bewegungsprofil BP.

Bei dem Verfahren zur Ermittlung eines Bewegungsablaufes kann der vorstehend beschriebene Fall als Möglichkeit mitermittelt werden. Hierbei wird der Station S für den Fall des Bereitstehens einer reduzierten Anzahl M von Läufern L das modifizierte Bewegungsprofil zugeordnet. Weiter werden dann nur die reduzierte Anzahl M von Läufern (oder virtuellen Achsen VA) der Station S1, zugeordnet. Vorteilhaft wird für jedes M kleiner N ein solches modifizierte Bewegungsprofil BP bereitgestellt und der Station S1 zugeordnet.

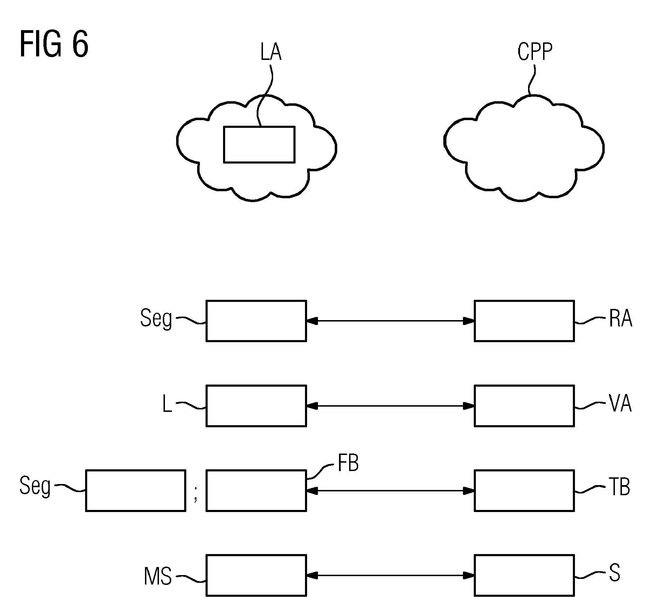

FIG 6 zeigt einen Vergleich des Linearantriebs LA und dem Computerprogrammprodukt CPP oder dem Projektgenerator PG. Weiter dient FIG 6 zur Gegenüberstellung der Elemente in der materiellen Welt des Linearantriebs LA und der virtuellen Welt des Computerprogrammprodukts CPP oder des Projektgenerators PG. Das Computerprogrammprodukt CPP und oder der Projektgenerator PG kann auf der Recheneinheit RE oder auf der Steuereinrichtung SE installiert sein und ablaufen. Das Förderband FB und/oder das Segment Seg ist in dem Computerprogrammprodukt CPP als Transportbereich TB abgebildet. Ein Segment Seg oder ein Förderband FB kann auch einer Station S zugeordnet sein. Ein Transportbereich TB dient zur Überführung der virtuellen Achse VA (entspricht dem Läufer L) von einer Stelle (des Linearantriebs LA) an eine andere Stelle (des Linearantriebs LA). Der Transportbereich TB kann ebenso dem Übergang der Zuordnung von einer Station S1 zu einer anderen Station S2 dienen. Analog kann ein Segment Seg oder ein Förderband FB in der materiellen Welt einen Läufer von einer Maschinenstation MS1 zu einer weiteren Maschinenstation MS2 überführen.

Im Rahmen der hier beschrieben Erfindung wird jedoch auch das Wort Läufer L in der virtuellen Welt des Projektgenerators PG oder des Computerprogrammprodukts CPP verwendet.

Ein Segment Seg, insbesondere die Steuerbefehle für ein solches Segment Seg wird in der virtuellen Welt des Computerprogramms CPP oder dem Projektgenerator PG als reale Achse RA beschrieben. In Bezug zur FIG 2 ist die Programmfunktion PF als Teil des Computerprogrammprodukts CPP auffassbar.

Die Zuordnung zeigt, dass die realen Elemente wie Läufer L, Segment Seg oder Maschinenstation MS1 virtuell entsprechende Elemente wie virtuelle Achse VA, reale Achse RA oder Station S1 haben. Somit kann durch das hier vorgestellte Verfahren, insbesondere mit Hilfe des Computerprogrammprodukts CPP, ein Linearantrieb LA simuliert werden kann. So ist eine fortwährende Ermittlung des Bewegungsablaufs BA möglich. Eine solche fortwährende Ermittlung erfolgt vorteilhaft dynamisch. Eine dynamische Ermittlung des Bewegungsablaufs BA wird auch als online-Ermittlung bezeichnet. Die online-Ermittlung des Bewegungsprofils erfolgt während der Laufzeit des Linearantriebs LA.

Vorteilhaft erfolgt die Ermittlung des Bewegungsablaufs direkt in der Steuereinrichtung SE. Der Bewegungsablauf BA kann fortwährend modifiziert werden oder in Echtzeit ermittelt werden.

Zusammenfassend betrifft die Erfindung ein Verfahren zur Ermittlung eines Bewegungsablaufs BA für einen Linearantrieb LA, ein Computerprogrammprodukt, einen Linearantrieb LA sowie eine industrielle Anlage. Für die Bereitstellung wird ein Linearantrieb LA und dem Linearantrieb LA zugeordnete Stationen S1, S2, S3 vorgegeben. Hierzu werden den Stationen S1, S2, S3 jeweils zumindest ein Bewegungsprofil BP zugeordnet. Weiter wird der jeweiligen Station S1, S2, S3 eine Eingangsbedingung, das ist eine vorgesehene Anzahl N von Läufern L, zugeordnet. Die jeweilige Station S1, S2, S3 ist ein Abbild einer Maschinenstation MS1, MS2, MS3. Eine Station S1, S2, S3 kann im Rahmen eines Engineering-Programms als Technologieprojekt aufgefasst werden. Das Bewegungsprofil BP gibt an, welche Bewegung die Läufer L auf den Segmenten Seg, gesteuert und/oder geregelt, ausführen. Es kann dynamisch eine Abfolge festgelegt werden, wobei die Abfolge angibt, welche Stationen S1, S2, S3 der jeweilige Läufer L nachfolgend durchlaufen soll. Nach Durchlauf des entsprechenden Bewegungsprofils BP wird der Läufer L der nächsten Station S1, S2, S3 zugeordnet. Aus den vorstehend ausgeführten Vorgaben sowie aus optional vorgebbaren Randbedingungen RB und/oder Startbedingungen wird der Bewegungsablauf BA berechnet. Die Berechnung erfolgt insbesondere während der Laufzeit des Linearantriebs LA (online-Berechnung). Der Bewegungsablauf BA kann an eine Steuereinrichtung SE des Linearantriebs LA übermittelt werden oder in der Steuereinrichtung SE ermittelt werden.

## Patentansprüche

1. Verfahren zur Ermittlung eines Bewegungsablaufs (BA) für eine Steuereinrichtung (SE) eines Linearantriebs (LA),
- wobei der Linearantrieb (LA) eine Mehrzahl von Segmenten (Seg) aufweist,
- wobei Läufer (L) zur Bewegung auf den Segmenten (Seg) ausgelegt sind,
- wobei der Bewegungsablauf (BA) für die Bewegung der Läufer (L) auf den Segmenten (Seg) ausgelegt ist,
- wobei die Steuereinrichtung (SE) zur Steuerung und/oder Regelung der Bewegung der Läufer (L) auf den Segmenten (Seg) ausgelegt ist,
wobei der Bewegungsablauf (BA) durch zumindest folgende Verfahrensschritte ermittelt wird:
- Vorgabe von
a) Stationen (S1, S2, S3), wobei die Stationen (S1, S2, S3) entlang des Linearantriebs (LA) angeordnet sind,
- wobei die Stationen (S1, S2, S3) Abbildungen von Maschinenstationen (MS1, MS2) oder Transortbereichen (TB) sind,
- wobei die Stationen (S1, S2, S3) jeweils eine vorgesehene Anzahl (N) von Läufern (L) als Eingangsbedingung aufweisen und nach Ablauf eines Bewegungsprofils (BP) die Läufer (L) ausgeben,
b) einer Abfolge der Läufer (L) durch die Stationen (S1, S2, S3),
- wobei nach Ausgabe der Läufer (L) aus der Station (S1, S2, S3) die Läufer (L) von einer anderen der Stationen (S1, S2, S3) aufgenommen werden,
c) Bewegungsprofile (BP) der Läufer in der jeweiligen Station (S1, S2, S3),
- Ermittlung des Bewegungsablaufs (BA) der Läufer (L) auf den Segmenten (Seg) aus den Vorgaben.

2. Verfahren nach Anspruch 1, wobei die Ermittlung des Bewegungsablaufs (BA) während des Betriebs des Linearantriebs (LA) erfolgt.

3. Verfahren nach Anspruch 1 oder 2, wobei die Abfolge der Läufer (L) durch die jeweilige Station (S1, S2, S3) anhand von Aufnahmekapazitäten der einzelnen Stationen (S1, S2, S3) und/oder der Transportbereiche ermittelt wird.

4. Verfahren nach einem der vorangehenden Ansprüche, wobei die von einer der Stationen (S1, S2, S3) ausgegebenen Läufer (L) von zumindest einer der weiteren Stationen (S1, S2, S3) oder einem Transportbereich (TB) aufgenommen werden.

5. Verfahren nach einem der vorangehenden Ansprüche, wobei das Bewegungsprofil (BP) angibt, wie die Läufer (L) die jeweilige Station (S1, S2, S3) zwischen Aufnahme der Läufer (L) und Abgabe der Läufer (L) durchfahren.

6. Verfahren nach einem der vorangehenden Ansprüche, wobei das Bewegungsprofil (BP) anhand von möglichen vorbereiteten (Teil-)Bewegungsprofilen (BP) ausgewählt wird.

7. Verfahren nach einem der vorangehenden Ansprüche, wobei das Bewegungsprofil (BP) in der Station als Kurvenscheibenfunktionen vorgegeben wird.

8. Verfahren nach einem der vorangehenden Ansprüche, wobei eine Berechnung des Bewegungsablaufs (BA) anhand einer, insbesondere zeitlichen, Abfolge der Läufer (L) durch die Stationen (S1, S2, S3) erfolgt.

9. Verfahren nach einem der Ansprüche 1 bis 7, wobei der Bewegungsablauf (BA) durch Aufnahmekapazitäten einzelner Stationen (S1, S2, S3) dynamisch vorgegeben wird, wobei sich die dynamische Vorgabe anhand einer momentanen Aufnahmekapazität der Stationen (S1, S2, S3) ermittelt.

10. Verfahren nach einem der vorangehenden Ansprüche, wobei die Position der Stationen (S1, S2, S3) bei dem Linearantrieb (LA) anhand der Abfolge der Aufnahme und Abgabe der Läufer (L) von den Stationen (S1, S2, S3) ermittelt wird.

11. Verfahren nach einem der vorangehenden Ansprüche, wobei Randbedingungen (RB) und/oder Startbedingungen in dem Bewegungsablauf (BA) berücksichtigt werden.

12. Verfahren nach Anspruch 11, wobei die Startbedingung als Position der Läufer (L) zu einem Anfangszeitpunkt (t-0) vorgegeben wird.

13. Verfahren nach einem der vorangehenden Ansprüche, wobei die Läufer (L) nach Aufnahme in die Station (S1, S2, S3) mit einer jeweiligen Adresse versehen werden.

14. Verfahren nach einem der vorangehenden Ansprüche, wobei das Bewegungsprofil (BP) und/oder der Bewegungsablauf (BA) eine Mehrzahl von Läufern (L) gruppiert und/oder die Bewegung von einem der Läufer (L) in Abhängigkeit von einem der anderen Läufer (L) beschreibt.

15. Verfahren nach einem der vorangehenden Ansprüche, wobei die jeweilige Station auch eine reduzierte Anzahl (M) von Läufern (L) nach Ablauf einer vorbestimmten Zeit (t-max) aufnimmt.

16. Computerprogrammprodukt zum Ablauf auf einer Recheneinheit (RE), wobei das Computerprogrammprodukt nach Installation auf der Recheneinheit für ein Verfahren zur Ermittlung eines Bewegungsablaufes (BA) gemäß einem der Ansprüche 1 bis 15 vorgesehen ist.

17. Computerprogrammprodukt nach Anspruch 16, wobei das Computerprogrammprodukt eine Steuerung der Bewegung von Läufern (L) auf dem Linearantrieb (LA) unterstützt, indem das Computerprogrammprodukt
- zur Initialisierung von technologischen Objekten, insbesondere Achsen (VA, RA), vorgesehen ist,
- und/oder zur Vorgabe der Anordnung von Segmenten (Seg) und der Stationen (S1, S2, S3) vorgesehen ist.

18. Steuereinrichtung zur Steuerung und/oder Regelung eines Linearantriebs (LA), wobei die Steuereinrichtung (SE) die Bewegung der Läufer (L) auf Segmenten (Seg) steuert und/oder regelt und wobei die Steuereinrichtung (SE) den Bewegungsablauf (BA) gemäß einem Verfahren nach einem der Ansprüche 1 bis 15 ermittelt.

19. Linearantrieb (LA), aufweisend Segmente (Seg), Läufer (L), optional zumindest eine Maschinenstation (MS1, MS2) und eine Steuereinrichtung (SE), wobei die Steuereinrichtung (SE) zur Aufnahme eines Bewegungsablaufs (BA) vorgesehen ist, welcher gemäß einem Verfahren nach einem der Ansprüche 1 bis 15 ermittelt ist.

20. Verfahren zum Betrieb eines Linearantriebes, wobei der Linearantrieb (LA) zur Durchführung eines Bewegungsablaufs (BA) vorgesehen ist und wobei der Bewegungsablauf (BA) nach einem Verfahren gemäß einem der Ansprüche 1 bis 15 bereitgestellt ist.

21. Industrielle Anlage, insbesondere eine Produktionsmaschine, Verpackungsmaschine oder eine Werkzeugmaschine, aufweisend einen Linearantrieb (LA) nach Anspruch 19.
